# EUROPÄISCHE PATENTANMELDUNG

(11) **EP 0 567 160 A1**
(43) Veröffentlichungstag der Anmeldung: **27.10.1993**
(21) Anmeldenummer: 93106751.6
(22) Anmeldetag: 26.04.1993
(51) Int. Cl.: A22B 5/00

(54) **Flüssigkeitsableitvorrichtung**

(30) Priorität: 24.04.1992 DE 4213568
(71) Anmelder: Banss Maschinenfabrik GmbH & Co. KG, D-35216 Biedenkopf (DE)
(72) Erfinder: Weigel, Wilfried, W-3563 Dautphetal-Friedensdorf (DE)
(74) Vertreter: Klunker . Schmitt-Nilson . Hirsch

(57) **Zusammenfassung**

Vorrichtung zur Ableitung einer Flüssigkeit (Flüssigkeitsableitvorrichtung), insbesondere einer in einem Schlachthof anfallenden Reinigungs- oder Spülflüssigkeit, von einer gegenüber einer Ablaufeinrichtung höhenveränderbaren, mit einer Flüssigkeitsaufnahmeeinrichtung (32) versehenen Hubeinrichtung (27) in die Ablaufeinrichtung, mit einer aufrecht angeordneten, starr ausgebildeten Flüssigkeitsleitung (11), in der ein in Hubrichtung der Hubeinrichtung (27) verlaufender Schlitz (13) vorgesehen ist, zur teilweisen Aufnahme eines an der Hubeinrichtung (27) angeordneten Flüssigkeitsablaufs (26), wobei der Flüssigkeitsablauf (26) mit einer den Schlitz (13) abdeckenden Schlitzabdeckung (28) gekoppelt ist.

## Beschreibung

Die vorliegende Erfindung betrifft eine Vorrichtung zur Ableitung einer Flüssigkeit (Flüssigkeitsableitvorrichtung), insbesondere einer in einem Schlachthof anfallenden Reinigungs- oder Spülflüssigkeit, von einer gegenüber einer Ablaufeinrichtung höhenveränderbaren, mit einer Flüssigkeitsaufnahmeeinrichtung versehenen Hubeinrichtung in die Ablaufeinrichtung mit einer aufrecht angeordneten, starr ausgebildeten Flüssigkeitsleitung, in der ein in Hubrichtung der Hubeinrichtung verlaufender Schlitz vorgesehen ist zur teilweisen Aufnahme eines an der Hubeinrichtung angeordneten Flüssigkeitsablaufs.

Aus Hygienegründen ist es in Schlachthöfen erforderlich, daß die zur Schlachtung und Weiterverarbeitung von Schlachttieren eingesetzten Vorrichtungen einer häufig wiederholten, gründlichen Reinigung unterzogen werden. Die hierbei verwendete Reinigungsflüssigkeit, also in der Regel Spülwasser, muß nach der Reinigung entsprechend den bestehenden hygienischen Bestimmungen gezielt in Bodenabläufe abgeführt werden, damit das verunreinigte Wasser nicht in Kontakt mit den Schlachtstücken kommen kann.

Besonders im Bereich der als Hubeinrichtung ausgeführten Arbeitsbühnen, die etwa bei der Rinderund Schweineschlachtung eingesetzt werden, erweist sich die Schaffung eines den hygienischen Anforderungen genügenden Wasserablaufs wegen der Höhenveränderbarkeit der Arbeitsbühne gegenüber dem ortsfesten Bodenablauf als äußerst schwierig.

Bei einer bekannten Vorrichtung zur Ableitung von Flüssigkeit von einer Arbeitsbühne ist ein mit einem Längsschlitz versehenes Standrohr vorgesehen, in dessen Schlitz ein an der Arbeitsbühne angeordneter Flüssigkeitsablauf beim Verfahren der Hebebühne längsbewegbar ist. Am unteren Ende des Standrohrs befindet sich der Bodenbablauf. Wenn Reinigungsflüssigkeit, die sich im Bereich der Arbeitsbühne angesammelt hat, durch den Flüssigkeitsablauf in das Standrohr zur nachfolgenden Ableitung in den Bodenablauf eingeleitet wird, besteht die Möglichkeit, daß Flüssigkeit durch den Schlitz aus dem Standrohr austritt. Dies erweist sich als unvereinbar mit den bestehenden hygienischen Vorschriften.

Zwar sind auch keinen Schlitz aufweisende, abgeschlossene, vom Wasserablauf der Hebebühne zum Bodenablauf führende Flüssigkeitsleitvorrichtungen bekannt, etwa in Form flexibler Anschlußschläuche, die den hygienischen Anforderungen genügen. Jedoch weisen die genannten Anschlußschläuche oder auch andere flexible Systeme den Nachteil auf, daß besondere Maßnahmen zur Aufnahme der flexiblen Systeme vorgesehen werden müssen, damit es bei eingefahrener Hebebühne nicht zu Behinderungen des Betriebsablaufs aufgrund der etwa am Boden liegenden Anschlußschläuche oder dergleichen kommt. Darüber hinaus erweisen sich flexible Systeme natürlich grundsätzlich als anfälliger hinsichtlich Beschädigungen, die im rauhen Schlachthofbetrieb oftmals nicht zu vermeiden sind.

Der vorliegenden Erfindung liegt daher die Aufgabe zugrunde, eine für die Verwendung bei Hubeinrichtungen geeignete Flüssigkeitsableitvorrichtung zu schaffen, die sich als widerstandsfähig hinsichtlich äußerer Beschädigungen erweist und das Austreten von Flüssigkeit verhindert.

Diese Aufgabe wird durch die Merkmale des Anspruchs 1 gelöst.

Durch die Kombination einer starr ausgebildeten, einen Schlitz zum Eintritt des Hebebühnenablaufs aufweisenden Flüssigkeitsleitung mit einer Schlitzabdeckung, die durch die Kopplung mit dem Arbeitsbühnenablauf gegenüber der Flüssigkeitsleitung bewegbar ist, wird trotz starrer, widerstandsfähiger Ausbildung der Flüssigkeitsleitung ein abgeschlossenes System geschaffen.

Die Schlitzabdeckung kann dabei so gestaltet sein, daß sie zwei Abdeckungsbereiche aufweist, die durch den Flüssigkeitsablauf voneinander abgeteilt sind, wobei jeder Abdeckungsbereich eine vollständige Abdeckung über die gesamte Länge des Schlitzes ermöglicht. Hierdurch ist sichergestellt, daß sowohl in eingefahrener als auch in maximal ausgefahrener Position der Arbeitsbühne eine vollständige Abdeckung des Schlitzes durch einen Abdeckungsbereich gegeben ist. Bei einer bevorzugten Ausführungsform ist die Schlitzabdeckung durch einen Abdeckungsriemen gebildet, wobei die Abdeckungsbereiche jeweils aus einem unteren Teilbereich und einem oberen Teilbereich des Abdeckungsriemens bestehen. Infolge der Ausbildung der Schlitzabdeckung als Abdeckungsriemen können beide Abdeckungsbereiche zusammenhängend ausgebildet sein und werden durch ein einziges Abdeckungsteil gebildet.

Für die Kopplung zwischen dem Flüssigkeitsablauf und der Schlitzabdeckung kann eine Verbindungseinrichtung vorgesehen werden, die gleichzeitig auch zur zusammenführenden Aufnahme der Endbereiche des Abdeckungsriemens dienen kann. Hierdurch ist ein Endlosriemen geschaffen, wobei die Verbindungseinrichtung sowohl zur Aufnahme des Flüssigkeitsablaufs dient, als auch eine Krafteinleitung für die eine Längsverschiebung des Riemens gegenüber dem Schlitz bewirkenden Riemenkräfte darstellt.

Die Anordnung des Abdeckungsriemens an der Flüssigkeitsleitung kann dabei so ausgebildet sein, daß der Abdeckungsriemen sich längs einer mit dem Schlitz versehenen Vorderseite der Flüssigkeitsleitung erstreckt, außerhalb deren Schlitzbereiches über Umlenkeinrichtungen umgelenkt und auf einer der Vorderseite gegenüberliegenden Rückseite zurückgeführt wird. Dabei ist es möglich, die Umlenkeinrichtungen zur leichteren Bewegbarkeit des Abdeckungsriemens als Umlenkrollen auszuführen.

Vorteilhafterweise ist die Verbindungseinrichtung in einer längs dem Schlitz verlaufenden Führungseinrichtung geführt. Hierdurch wird verhindert, daß es während der Längsbewegung der Riemenabdeckung gegenüber dem Schlitz zu einem Abheben des Abdeckungsriemens vom Schlitz kommen kann. Diese vorteilhafte Wirkung kann dadurch noch vergrößert werden, daß die Führungseinrichtung neben der Führung des Verbindungsstücks auch der Führung des Abdeckungsriemens dient.

Eine besonders vorteilhafte Art, die Führungseinrichtung zu realisieren, besteht darin, zwei jeweils die Seitenteile der Flüssigkeitsleitung seitlich überragende, sich in den Bereich der Vorderseite und der Rückseite erstreckende Führungsleisten vorzusehen. Hierdurch wird erreicht, daß die Führung des Abdeckungsriemens nicht nur im Bereich der Vorderseite, sondern nahezu über die gesamte Riemenlänge erfolgt. Ein Abspringen des Abdeckungsriemens von der Flüssigkeitsleitung, das ein Vorrichtungsversagen zur Folge hätte, wird somit wirksam verhindert.

Als besonders vorteilhaft erweist es sich, wenn die Verbindungseinrichtung aus zwei Plattenteilen, nämlich einem Führungsteil und einem Konterteil, gebildet ist, die die Endbereiche der Abdeckungsriemen flächig zwischen sich aufnehmen. Durch die flächige Aufnahme der Riemenendbereiche ist eine besonders sichere und dauerhafte Verbindung geschaffen.

Um auf einfache Art und Weise eine Innenreinigung der Flüssigkeitsleitung durchführen zu können, ist diese mit einer Zuführung versehen, durch die Reinigungs- oder Desinfektionsmittel in den Innenraum der Flüssigkeitsleitung eingesprüht werden kann.

Durch eine mögliche Kopplung der Zuführung mit der Verbindungseinrichtung ist eine gute Erreichbarkeit aller Innenraumbereiche der Flüssigkeitsleitung durch die Zuführung gegeben.

Zur Ausleitung von durch den Arbeitsbühnenwasserablauf oder die Zuführung in den Innenraum der Flüssigkeitsleitung eingeführten Flüssigkeit ist im unteren Endbereich der Flüssigkeitsleitung ein Ablauf vorgesehen, dem eine im Innenraum der Flüssigkeitsleitung angeordnete Ableiteinrichtung zugeordnet sein kann. Die Ableiteinrichtung, die etwa die Form eines schrägstehenden Blechs haben kann, ermöglicht eine im wesentlichen rückstandsfreie Ableitung von Flüssigkeit aus dem Innenraum der Flüssigkeitsleitung.

Nachfolgend wird eine bevorzugte Ausführungsform der Erfindung anhand der Zeichnungen näher erläutert. Es zeigen:
- **Fig. 1**: eine Flüssigkeitsleitvorrichtung in einer Vorderansicht;
- **Fig. 2**: die Flüssigkeitsleitvorrichtung gemäß Fig. 1 in einer Seitenansicht unter Darstellung einer benachbart angeordneten Arbeitsbühne;
- **Fig. 3**: eine Flüssigkeitsleitung als Bestandteil der Flüssigkeitsleitvorrichtung;
- **Fig. 4**: einen Schnitt durch die Flüssigkeitsleitvorrichtung gemäß Schnittlinienverlauf IV-IV in Fig. 2;
- **Fig. 5**: eine Konterplatte einer in der Flüssigkeitsleitvorrichtung verwendeten Verbindungseinrichtung;
- **Fig. 6**: eine Führungsplatte der Verbindungseinrichtung.

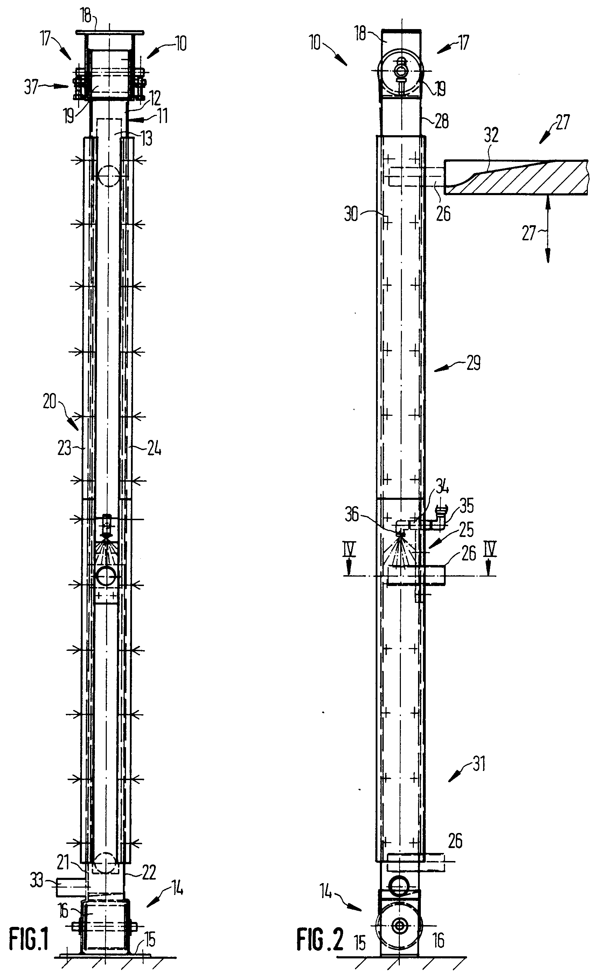

Die **Fig. 1** und **2** zeigen eine Flüssigkeitsleitvorrichtung 10 in einer Gesamtdarstellung. Die Flüssigkeitsleitvorrichtung 10 weist eine rohrförmig ausgebildete Flüssigkeitsleitung 11 auf, längs deren Vorderseite 12 ein Längsschlitz 13 verläuft. Die Flüssigkeitsleitung 11 ist mit ihrem unteren Ende auf einer Rolleneinrichtung 14 angeordnet, deren Rollenständer 15 eine Umlenkrolle 16 aufnimmt und gleichzeitig als Bodenhalterung für die Flüssigkeitsleitvorrichtung 10 dient. Die Flüssigkeitsleitung 11 ist an ihrem oberen Ende mit einer weiteren Rolleneinrichtung 17 versehen, deren Rollenständer 18 zur Aufnahme einer weiteren Umlenkrolle 19 und gleichzeitig, wie ebenfalls der untere Rollenständer 15, zum Endabschluß der rohrförmigen Flüssigkeitsleitung 11 dient.

Wie aus den **Fig. 1** und **2** ersichtlich, ist die Flüssigkeitsleitung 11 bei dem hier dargestellten Ausführungsbeispiel aus einem an seiner Vorderseite 12 mit dem Längsschlitz 13 versehenen Vierkantrohr gebildet. Natürlich sind auch andere Querschnittsformen zur Verwendung bei einer Flüssigkeitsleitung 11 geeignet.

Die Flüssigkeitsleitung 11 ist im Bereich des Längsschlitzes 13 mit einer Führungseinrichtung 20 versehen, die aus zwei längs von Querseiten 21, 22 der Flüssigkeitsleitung 11 angeordneten Führungsleisten 23, 24 gebildet ist. In den Führungsleisten 23, 24 ist eine Verbindungseinrichtung 25 gegenüber dem Längsschlitz 13 längsverschiebbar geführt.

Die Verbindungseinrichtung 25 dient zur Aufnahme eines Flüssigkeitsablaufs 26, der an einer, wie durch den Doppelpfeil 27 dargestellt, gegenüber dem Boden höhenveränderbaren Arbeitsbühnenplattform 27 angeordnet ist. Zur besseren Darstellung der Längsverschiebbarkeit des in der Verbindungseinrichtung 25 aufgenommenen Flüssigkeitsablaufs 26 ist dieser in drei verschiedenen Stellungen, nämlich einer untersten Stellung, einer Mittenstellung und einer obersten Stellung dargestellt. In der Mittenstellung ist der Flüssigkeitsablauf 26 zusammen mit der Verbindungseinrichtung 25 gezeigt.

Neben der Aufnahme des Flüssigkeitsablaufs 26 dient die Verbindungseinrichtung 25 auch zur verbindenden Aufnahme von hier nicht im einzelnen dargestellten Endbereichen eines von oberhalb und unterhalb des Flüssigkeitsablaufs 26 in die Verbindungseinrichtung 25 reichenden Abdeckungsriemens 28. Hierbei verläuft der Abdeckungsriemen 28, ausgehend von der in **Fig. 2** dargestellten Mittenstellung der Verbindungseinrichtung 25, in seinem oberen Abdeckungsbereich 29 zur oberen Umlenkrolle 19, dann längs einer der Vorderseite 12 gegenüberliegenden Rückseite 30 der Flüssigkeitsleitung 11 zur unteren Umlenkrolle 16, um schließlich in seinem unteren Abdeckungsbereich 31 wieder längs der Vorderseite 12 bis zur Verbindungseinrichtung 25 zu verlaufen. Bei einem Auf- oder Abfahren der Arbeitsbühnenplattform 27 wird der Flüssigkeitsablauf 26 entsprechend den Verfahrbewegungen der Arbeitsbühnenplattform 27 in dem Längsschlitz 13 längsbewegt. Infolge der Kopplung des Flüssigkeitsablaufs 26 mit der Verbindungseinrichtung 25 wird die Bewegung des Flüssigkeitsablaufs 26 auf den Abdeckungsriemen 28 übertragen, der sich demzufolge über die Umlenkrollen 16, 19 ebenfalls längs dem Längsschlitz 13 bewegt und diesen dabei permanent abdeckt.

Wird nun Flüssigkeit, die sich etwa nach einem Reinigungsvorgang der Arbeitsbühne bzw. der Arbeitsbühnenplattform 27 in einer etwa durch eine Vertiefung in der Arbeitsbühnenplattform 27 ausgebildeten Flüssigkeitsaufnahmeeinrichtung 32 angesammelt hat, durch den Flüssigkeitsablauf 26 in die Flüssigkeitsleitung 11 eingeleitet, so wird unabhängig von der Positionierung des Flüssigkeitsablaufs 26 ein Austreten von Flüssigkeit aus dem Längsschlitz 13 durch den Abdeckungsriemen 28 verhindert. In den Innenraum der Flüssigkeitsleitung 11 eingetretene Flüssigkeit wird durch einen am unteren Ende der Flüssigkeitsleitung 11 angeordneten Flüssigkeitsablauf 33 aus dieser herausgeleitet. Von dem Flüssigkeitsablauf 33 kann dann die Flüssigkeit auf hier nicht näher dargestellte Art und Weise, gegebenenfalls unter Zwischenschaltung eines Geruchsverschlusses, in einen Bodenabfluß eingeleitet werden.

Wie aus **Fig. 2** zu ersehen ist, ist die Verbindungseinrichtung 25 mit einer Zuführung 34 versehen, an die eine Zuleitung 35 zur Zuführung von Reinigungs- oder Desinfektionsflüssigkeit, die zur Innenreinigung der Flüssigkeitsleitung 11 bestimmt ist, angeschlossen werden kann. im Innenraum der Flüssigkeitsleitung 11 ist an die als Rohrstutzen aus-geführte Zuführung 34 ein Düsenkopf 36 zur besseren Verteilung der Reinigungs- oder Desinfektionsflüssigkeit angebracht.

Wie am besten aus **Fig. 1** zu ersehen ist, ist die obere Rolleneinrichtung 17 mit einer Spannvorrichtung 37 versehen, die ein Einstellen der Riemenspannung des Abdeckungsriemens 28 ermöglicht, um zur wirkungsvollen Abdeckung des Längsschlitzes 13 eine weitestgehend parallele Ausrichtung des Abdeckungsriemens 28 zur Vorderseite 12 mit glatter Riemenfläche zu erzielen.

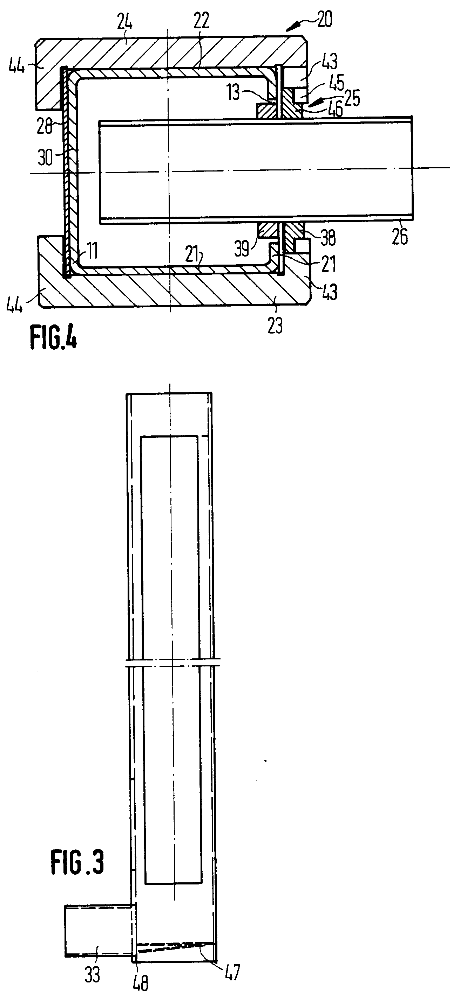

**Fig. 3** zeigt in einer Einzeldarstellung die bei diesem Ausführungsbeispiel aus einem mit einem Längsschlitz versehenen Vierkantrohr gebildete Flüssigkeitsleitung 11, wobei zur Erzielung eines im wesentlichen rückstandsfreien Ablaufs der Flüssigkeit am unteren Ende der Flüssigkeitsleitung 11 ein ausgußförmig ausgebildetes Leitblech 47 angeordnet ist, dessen Ausgußkante 48 mit der Unterkante des Flüssigkeitsablaufs 33 abschließt.

Zur Erzeugung eines Ablaufgefälles sind die Mittelachsen der Flüssigkeitsabläufe 26 und 33 gegenüber der Horizontalen leicht geneigt.

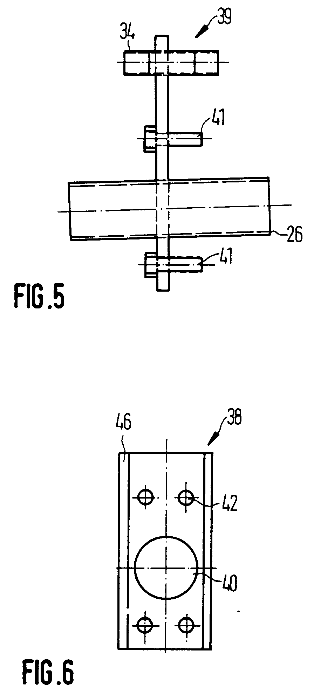

Zur besseren Erläuterung des Zusammenwirkens von Abdeckungsriemen 28, Führungseinrichtung 20, Verbindungseinrichtung 25 und Längsschlitz 13 in der Flüssigkeitsleitung 11 ist in **Fig. 4** ein Querschnitt der Flüssigkeitsleitvorrichtung 10 in Höhe der Verbindungseinrichtung 25 dargestellt.

Die Verbindungseinrichtung 25 besteht aus einer Führungsplatte 38 und einer mit dieser über eine Verschraubung verbundenen Konterplatte 39. Die Konterplatte 39 und die Führungsplatte 38 sind als Einzelteile noch einmal in den **Fig. 5** und **6** dargestellt.

Der Flüssigkeitsablauf 26 ist aus einem Rohrstutzen gebildet und mit der Konterplatte 39 verschweißt. Zur Herstellung der Verbindungseinrichtung 25 ist der Flüssigkeitsablauf 26 durch eine entsprechende Aufnahmebohrung 40 in der Führungsplatte 38 hindurchgeführt Nach Zwischenlegung des unteren und oberen Endbereichs des Abdeckungsriemens 28 zwischen die Führungsplatte 38 und die Konterplatte 39 werden diese mittels einer Schraubverbindung - **Fig. 5** zeigt hierfür beispielhaft Schrauben 41, die durch Befestigungsbohrungen 42 in der Konterplatte 39 hindurchgeführt werden - unter Bildung der Verbindungseinrichtung 25 miteinander verschraubt.

Die aus den beiden Führungsleisten 23, 24 bestehende Führungseinrichtung 20 bewirkt sowohl eine Führung der Führungsplatte 38 der Verbindungseinrichtung 25 und des damit verbundenen Abdeckungsriemens 28 längs des Längsschlitzes 13 als auch eine Abdichtung des Längsschlitzes 13 durch den Abdeckungsriemen 28.

Die Führungsleisten 23, 24 umgreifen die Flüssigkeitsleitung 11 im Bereich ihrer Querseiten 21, 22 derart, daß in den Bereich der Rückseite 30 bzw. der Vorderseite 12 hineinragende Seitenränder 43, 44 die Randbereiche des Abdeckungsriemens 28 zwischen sich und der Vorderseite 12 bzw. der Rückseite 30 aufnehmen. Hierbei ist zumindest im Bereich des Längsschlitzes 13 der Zwischenraum zwischen der Vorderseite 12 und den vorderen Seitenrändern 43 so ausgebildet, daß der Abdeckungsriemen 28 soeben unter Vermeidung einer Klemmung durch den Zwischenraum längs dem Längsschlitz 13 bewegt werden kann.

Die vorderen Seitenränder 43 der Führungsleisten 23, 24 weisen eine Querschnittsabstufung 45 auf, so daß die mit einer korrespondierenden Querschnittsabstufung 46 versehene Führungsplatte 38 einerseits sicher in Längsrichtung des Längsschlitzes 13 geführt und andererseits von einem Abheben vom Längsschlitz abgehalten wird.

Für die Herstellung der Führungsleisten 23, 24 eignet sich in besonderer Weise Kunststoff, da wegen dessen in der Regel guten Gleiteigenschaften der Zwischenraum zwischen den vorderen Seitenrändern der Führungsleisten 23, 24 und der Vorderseite 12 der Flüssigkeitsleitung besonders gering gewählt werden kann, ohne daß es zu Einklemmungen des Abdeckungsriemens 28 kommt. Um eine gute Korrosionsbeständigkeit bei hoher Festigkeit der Flüssigkeitsleitung 11 zu erzielen, bietet sich zu deren Herstellung in besonderer Weise Edelstahl an. Für den Abdeckungsriemen 28 kann Kunststoff verwendet werden, der zur Erzielung einer genügenden Längsfestigkeit mit einer Verstärkung, etwa durch eine Drahteinlage, versehen sein kann.

## Patentansprüche

1. Vorrichtung zur Ableitung einer Flüssigkeit (Flüssigkeitsableitvorrichtung), insbesondere einer in einem Schlachthof anfallenden Reinigungs- oder Spülflüssigkeit, von einer gegenüber einer Ablaufeinrichtung höhenveränderbaren, mit einer Flüssigkeitsaufnahmeeinrichtung versehenen Hubeinrichtung in die Ablaufeinrichtung, mit einer aufrecht angeordneten, starr ausgebildeten Flüssigkeitsleitung, in der ein in Hubrichtung der Hubeinrichtung verlaufender Schlitz vorgesehen ist, zur teilweisen Aufnahme eines an der Hubeinrichtung angeordneten Flüssigkeitsablaufs,
**dadurch gekennzeichnet,**
daß der Flüssigkeitsablauf (26) mit einer den Schlitz (13) abdeckenden Schlitzabdeckung (28) gekoppelt ist.

2. Vorrichtung nach Anspruch 1,
**dadurch gekennzeichnet,**
daß die Schlitzabdeckung (28) sich beidseitig des Flüssigkeitsablaufs (26) erstreckt, wobei jeder der von durch den Flüssigkeitsablauf (26) voneinander abgeteilten Abdeckungsbereiche (29,31) eine vollständige Abdeckung über die gesamte Länge des Schlitzes (13) ermöglicht.

3. Vorrichtung nach Anspruch 2,
**dadurch gekennzeichnet,**
daß die Abdeckungsbereiche durch einen unteren Teilbereich (Unterbereich 31) und einen oberen Teilbereich (Oberbereich 29) eines vorzugsweise einstückig ausgebildeten Abdeckungsriemens (28) gebildet sind.

4. Vorrichtung nach einem oder mehreren der vorangehenden Ansprüche,
**dadurch gekennzeichnet,**
daß für die Kopplung zwischen dem Flüssigkeitsablauf (26) und der Schlitzabdeckung (28) eine Verbindungseinrichtung (25) vorgesehen ist.

5. Vorrichtung nach Anspruch 4,
**dadurch gekennzeichnet,**
daß der Abdeckungsriemen (28) mit seinen Endbereichen in der Verbindungseinrichtung (25) unter Bildung eines Endlosriemens zusammengeführt ist.

6. Vorrichtung nach Anspruch 5,
**dadurch gekennzeichnet,**
daß die Verbindungseinrichtung (25) zwei Plattenteile, nämlich eine Führungsplatte (38) und eine Konterplatte (39) aufweist, zwischen denen die Endbereiche des Abdeckungsriemens (28) aufgenommen sind.

7. Vorrichtung nach einem oder mehreren der vorangehenden Ansprüche,
**dadurch gekennzeichnet,**
daß der Abdeckungsriemen (28) längs einer mit dem Schlitz (13) versehenen Vorderseite (12) der Flüssigkeitsleitung (11) verläuft, außerhalb des Schlitzbereichs über Umlenkeinrichtungen (14,17) umgelenkt und auf einer Rückseite der Flüssigkeitsleitung (11) zurückgeführt ist.

8. Vorrichtung nach Anspruch 7,
**dadurch gekennzeichnet,**
daß die Umlenkeinrichtungen (14,17) mit Umlenkrollen (16,19) versehen sind.

9. Vorrichtung nach einem oder mehreren der vorangehenden Ansprüche,
**dadurch gekennzeichnet,**
daß die Verbindungseinrichtung (25) in einer längs dem Schlitz (13) verlaufenden Führungseinrichtung (20) geführt ist.

10. Vorrichtung nach Anspruch 9,
**dadurch gekennzeichnet,**
daß die Führungseinrichtung (20) neben der Führung der Verbindungseinrichtung (25) auch der Führung des Abdeckungsriemens (28) dient.

11. Vorrichtung nach Anspruch 9 oder 10,
**dadurch gekennzeichnet,**
daß die Führungseinrichtung (20) aus zwei jeweils Querseiten (21,22) der Flüssigkeitsleitung (11) seitlich überragende, sich in den Bereich der Vorderseite (12) und der Rückseite (30) erstreckenden Führungsleisten (23,24) gebildet ist.

12. Vorrichtung nach einem oder mehreren der vorangehenden Ansprüche,
**dadurch gekennzeichnet,**
daß die Flüssigkeitsleitung (11) mit einer, vorzugsweise der Zuführung von Reinigungs- oder Desinfektionsmittel dienenden Zuführung (34) versehen ist.

13. Vorrichtung nach Anspruch 12,
**dadurch gekennzeichnet,**
daß die Zuführung (34) mit der Verbindungseinrichtung (25) gekoppelt ist.

14. Vorrichtung nach einem oder mehreren der vorangehenden Ansprüche,
**dadurch gekennzeichnet,**
daß die Flüssigkeitsleitung (11) in ihrem unteren Endbereich mit einem Flüssigkeitsablauf (33) versehen ist, dem eine im Inneren der Flüssigkeitsleitung (11) angeordnete Ableiteinrichtung (47) vorgeordnet ist.
